# FASCICULE DE BREVET EUROPEEN

(11) **EP 0 800 952 B1**
(45) Date de publication et mention de la délivrance du brevet: **29.09.1999**
(21) Numéro de dépôt: 97400778.3
(22) Date de dépôt: 03.04.1997
(51) Int. Cl.: B60N 2/12

(54) **Siège de véhicule, déplaçable vers l'avant pour accéder à un espace arrière**
Kraftfahrzeugsitz, nach vorn bewegbar, um zu einem Hinterraum Zugang zu haben
Forwardly displaceable automotive vehicle seat, to access the rear space

(30) Priorité: 05.04.1996 FR 9604347
(43) Date de publication de la demande: 15.10.1997
(73) Titulaire: BERTRAND FAURE EQUIPEMENTS S.A., 92100 Boulogne (FR)
(72) Inventeur: Bouhelier, Jean-Luc, 61100 Flers (FR); Jaudouin, Paul, 61100 Saint Georges des Groseillers (FR)
(74) Mandataire: Burbaud, Eric

(56) Documents cités:
- DE-A- 2 708 423
- GB-A- 2 298 785

## Description

La présente invention est relative aux sièges de véhicules, déplaçables vers l'avant pour accéder à un espace arrière, notamment pour accéder à la banquette arrière dans des véhicules automobiles à deux portes.

De tels sièges de véhicules doivent pouvoir d'une part être réglés longitudinalement, et d'autre part être déplacés rapidement vers l'avant afin d'accéder à l'espace arrière, puis être ramenés également rapidement vers l'arrière en retrouvant alors leur position initialement réglée.

Le document EP-A-0 691 237 divulgue un exemple d'un tel siège de véhicule, comportant d'une part une assise montée coulissante longitudinalement vers l'avant ou vers l'arrière au moyen de glissières, et d'autre part un dossier monté pivotant sur l'assise autour d'un axe transversal horizontal de façon à pouvoir être déplacé entre une position relevée d'utilisation et une position rabattue vers l'avant où le siège n'est pas utilisable, chaque glissière comportant un profilé fixe solidarisable avec le véhicule et un profilé mobile qui supporte l'assise, l'un de ces deux profilés étant dit ci-après premier profilé et l'autre profilé étant dit ci-après deuxième profilé, au moins une des glissières comportant :
- un verrou qui est monté sur le premier profilé et qui est déplaçable entre d'une part une position verrouillée où il coopère avec un élément complémentaire lié au deuxième profilé pour maintenir le profilé mobile dans une position normale d'utilisation réglable, et d'autre part une position déverrouillée où il permet un déplacement longitudinal libre du profilé mobile vers l'avant, jusqu'à une position de butée avant, ce verrou étant sollicité vers sa position verrouillée par un ressort de verrou et pouvant être déplacé de sa position verrouillée à sa position déverrouillée au moyen d'un premier câble relié à des moyens de commande de verrou,
- une cale qui est déplaçable entre d'une part une position active où elle bloque le verrou dans sa position déverrouillée et d'autre part une position effacée où elle n'interfère pas avec le verrou, cette cale étant sollicitée vers sa position active par un ressort de cale, et ladite cale étant maintenue dans sa position effacée tant que la glissière est dans sa position normale d'utilisation, ce maintien étant obtenu au moyen d'un organe de butée qui est monté sur le deuxième profilé de façon à être déplaçable par rapport à ce profilé pour rester au contact de la cale lorsqu'on règle la position normale d'utilisation de la glissière, et cet organe de butée restant ensuite solidaire du deuxième profilé tant qu'on ne règle pas la position normale d'utilisation de la glissière.

Ce siège de véhicule donne des résultats satisfaisants.

Toutefois, lorsque le siège est ramené vers l'arrière après avoir été déplacé vers l'avant pour accéder à l'espace situé derrière le siège, l'utilisateur du siège n'a pas de garantie absolue que les glissières sur lesquelles coulisse le siège se soient à nouveau verrouillées, sauf à vérifier manuellement ce verrouillage.

Or, si l'utilisateur s'assied sur le siège alors que ce siège est libre de coulisser longitudinalement, cet utilisateur court un risque en cas d'accident subi par le véhicule.

La présente invention a notamment pour but de pallier cet inconvénient.

A cet effet, selon l'invention, un siège du genre en question est caractérisé en ce qu'il comporte en outre un organe de blocage qui est monté sur un premier élément et qui peut être placé dans une position de blocage où il coopère avec un deuxième élément pour bloquer le dossier en position rabattue, lesdits premier et deuxième éléments constituant l'un l'assise et l'autre le dossier, l'organe de blocage étant sollicité par un ressort vers sa position de blocage et ledit organe de blocage étant en outre relié au verrou par un deuxième câble qui permet à l'organe de blocage de se placer dans sa position de blocage lorsque le verrou est dans sa position déverrouillée, mais qui, lorsque le verrou est dans sa position verrouillée, place l'organe de blocage dans une position effacée où il ne bloque pas le dossier, et le ressort de verrou étant suffisamment puissant pour ramener simultanément le verrou dans sa position verrouillée et l'organe de blocage dans sa position effacée contre l'action du ressort de l'organe de blocage, lorsque ledit verrou cesse d'être maintenu dans sa position déverrouillée par le premier câble ou la cale.

Grâce à ces dispositions, le dossier du siège reste sensiblement dans sa position rabattue vers l'avant, qui interdit l'utilisation du siège, tant que le verrou de la glissière de ce siège n'est pas revenue en positon verrouillée : on évite ainsi tout risque d'accident lié à une absence de verrouillage de la glissière.

Dans des modes de réalisation préférés, on a recours en outre à l'une et/ou à l'autre des dispositions suivantes :
- les moyens d'actionnement de verrou sont constitués par le dossier lui-même, qui est relié au premier câble pour placer le verrou dans sa position déverrouillée lorsque ledit dossier est placé dans sa position rabattue, et l'organe de blocage étant conçu pour bloquer le dossier dans sa position rabattue avec un certain jeu angulaire qui permet de relever légèrement le dossier à partir de sa position rabattue, suffisamment pour que le premier câble n'empêche plus le verrou de revenir en position verrouillée ;
- au moins la glissière qui comporte le verrou est réglable longitudinalement au moyen d'un ensemble vis-écrou, cet ensemble comprenant une vis sans fin qui s'étend longitudinalement parallèlement à la glissière et qui est entraînée par un moteur, cette vis sans fin étant montée rotative sur le deuxième profilé et étant vissée dans un écrou qui constitue à la fois l'élément complémentaire avec lequel coopère le verrou et l'organe de butée qui coopère avec la cale ;
- l'organe de blocage est monté sur l'assise et peut être engagé dans un logement solidaire du dossier pour bloquer ce dossier en position rabattue ;
- le premier profilé est le profilé fixe et le deuxième profilé est le profilé mobile, et au moins le deuxième câble coulisse dans une gaine flexible qui présente deux extrémités axiales fixées rigidement l'une au profilé fixe et l'autre à l'assise du siège ;
- la cale est déplaçable axialement en translation par rapport au premier profilé, entre sa position active et sa position effacée ;
- le verrou est actionné par un levier monté pivotant autour d'un axe horizontal, ce levier présentant, de part et d'autre de son axe, un premier bras qui est relié aux premier et deuxième câbles et un deuxième bras qui coopère avec le verrou, le verrou étant monté sur le profilé fixe qui constitue ainsi le premier profilé, et ce verrou étant guidé en coulissement vertical par le profilé fixe et étant déplaçable vers le bas pour passer de sa position verrouillée à sa position déverrouillée, ce qui correspond à un déplacement vers le haut du premier bras du levier ;
- le deuxième bras du levier d'actionnement du verrou coopère avec ce verrou uniquement en prenant appui sur une portion inférieure appartenant à ce verrou, de façon à déplacer ce verrou vers le bas lorsque le premier bras du levier est déplacé vers le haut.

D'autres caractéristiques et avantages de l'invention apparaîtront au cours de la description détaillée suivante d'une de ses formes de réalisation, donnée à titre d'exemple non limitatif, en regard des dessins joints.

Sur les dessins :
- la figure 1 est une vue schématique écorchée d'un siège de véhicule selon l'invention, en position normale d'utilisation,
- la figure 2 est une vue en coupe longitudinale d'une des glissières du siège de la figure 1, en position normale d'utilisation,
- la figure 3 est une vue en coupe selon la ligne III-III de la figure 2,
- la figure 4 est une vue de détail en élévation selon la direction IV de la figure 3,
- la figure 5 est une vue similaire à la figure 1, qui représente le siège lorsque le dossier est rabattu et que l'assise commence à être déplacée vers l'avant,
- la figure 6 est une vue similaire à la figure 5, qui représente le siège lorsque le dossier est rabattu et que l'assise commence a être ramenée vers l'arrière après avoir été déplacée jusqu'en butée avant,
- la figure 7 est une vue similaire à la figure 2, dans la position du siège représentée sur la figure 6,
- et la figure 8 est une vue en coupe selon la ligne VIII-VIII de la figure 7.

Sur les différentes figures, les mêmes références désignent des éléments identiques ou similaires.

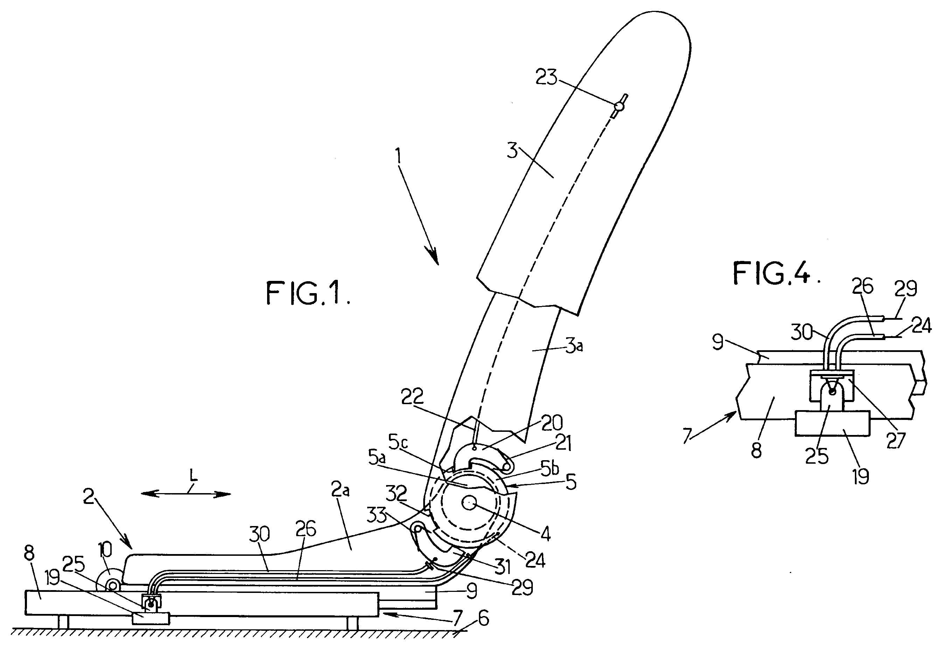

La figure 1 représente schématiquement l'ossature d'un siège de véhicule 1, notamment un siège avant de véhicule automobile à deux portes, c'est-à-dire un véhicule dans lequel il est nécessaire de déplacer au moins un des sièges avant pour accéder à la banquette arrière.

Le siège 1 comporte une assise 2 et un dossier 3 qui est monté pivotant sur l'assise 2 autour d'un axe transversal 4 horizontal, ce montage étant en général effectué au moyen d'un mécanisme d'articulation 5 qui se présente sensiblement sous la forme d'un boîtier circulaire aplati et qui est interposé entre d'une part un flasque latéral 3a métallique appartenant au dossier 3 et d'autre part un flasque latéral 2a métallique appartenant à l'assise 2.

Le mécanisme d'articulation 5, qui permet de régler l'inclinaison du dossier, est un mécanisme classique qui ne sera pas décrit ici. A titre d'illustration non limitative, le document EP-A-0 505 229 décrit un exemple d'un tel mécanisme.

L'assise 2 est montée sur le plancher 6 du véhicule au moyen de deux glissières métalliques 7 juxtaposées, dont une seule est visible sur la figure 1, de façon à permettre une translation de l'assise 2 dans une direction longitudinale L, vers l'avant ou vers l'arrière.

Chacune des glissières 7 comporte d'une part un profilé métallique fixe 8 qui est solidarisé au plancher 6 du véhicule, et d'autre part un profilé métallique mobile 9 sur lequel est monté l'assise 2 du siège, le profilé mobile pouvant coulisser le long du profilé fixe entre une position de butée avant et une position de butée arrière.

Dans l'exemple considéré, le réglage longitudinal de l'assise 2 du siège est réalisé au moyen d'un moteur électrique 10.

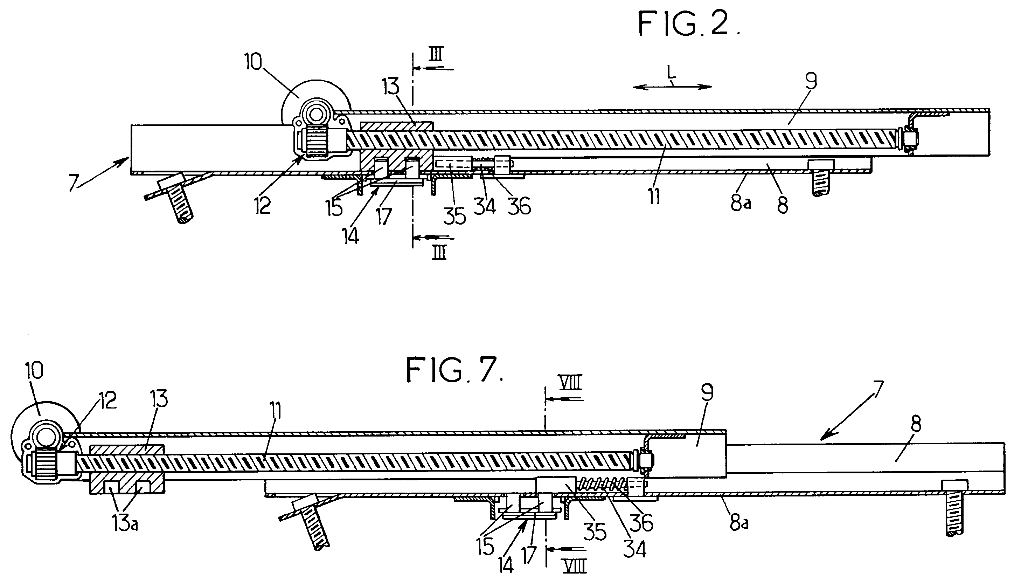

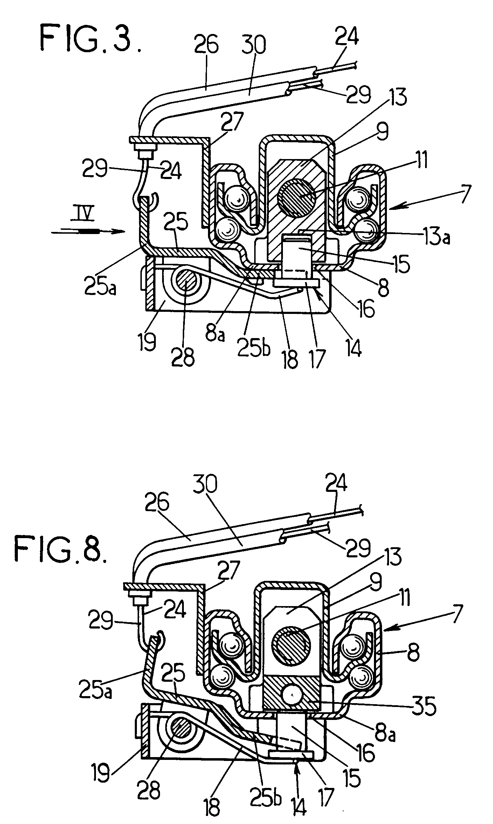

Comme représenté plus en détail sur les figures 2 et 3, ce moteur 10 est monté sur le profilé mobile 9 d'au moins l'une des deux glissières 7, et ce moteur entraîne en rotation une vis sans fin 11 métallique par l'intermédiaire d'un engrenage 12, cette vis sans fin étant montée rotative sur le profilé mobile 9 de ladite glissière.

La vis sans fin 11 est vissée dans un écrou métallique 13 qui est solidarisé avec le profilé fixe 8 au moyen d'un verrou métallique 14. Le verrou 14 est constitué sous la forme d'une ou plusieurs goupilles cylindriques verticales 15, au nombre de deux dans l'exemple considéré, qui pénètrent dans des logements verticaux correspondants 13a ménagés en partie inférieure de l'écrou 13 et qui coulissent également verticalement dans des orifices de guidage 16 percés dans le fond 8a du profilé fixe.

Les deux goupilles verticales 15 du verrou sont fixées par leur extrémité inférieure à une même plaque de liaison 17 horizontale qui est située sous le fond 8a du profilé fixe et qui est sollicité vers le haut par un ressort de verrou 18 monté sur un support 19 solidaire du profilé fixe, de façon que le verrou 14 soit normalement maintenu dans sa position verrouillée.

Du fait que l'écrou 13 est ainsi normalement maintenu fixe, une rotation de la vis sans fin 11 entraîne également une translation de ladite vis sans fin et du profilé mobile 9 dans la direction longitudinale L, ce qui permet à un utilisateur du siège de régler à sa convenance une position normale d'utilisation dudit siège (figure 1).

Par ailleurs, afin d'accéder à la banquette arrière du véhicule, il est également nécessaire de pouvoir rapidement rabattre vers l'avant le dossier 3 en repoussant simultanément l'assise 2 jusqu'à sa butée avant, puis de ramener rapidement l'assise 2 et le dossier 3 dans leur position initiale respective.

Pour permettre le rabattement du dossier 3 vers l'avant, ce dossier peut être pourvu de tous moyens de déblocage connus permettant de le laisser pivoter librement vers l'avant.

A titre d'exemple, comme représenté sur la figure 1, le mécanisme d'articulation 5 peut présenter d'une part un flasque fixe 5a, fixé rigidement au flasque 2a de l'assise, et d'autre part un flasque mobile 5b présentant à sa périphérie une encoche 5c ou un autre logement dans lequel peut s'engager un crochet de verrouillage 20 monté pivotant sur le flasque 3a du dossier.

Ce crochet de verrouillage 20 est sollicité vers sa position verrouillée par un ressort 21, et il est en outre relié par un câble 22 à une manette 23 qui est accessible sur le côté du dossier pour permettre à un utilisateur de déverrouiller le crochet 20 en autorisant ainsi le pivotement vers l'avant du dossier 3, jusqu'à une position rabattue représentée sur la figure 5.

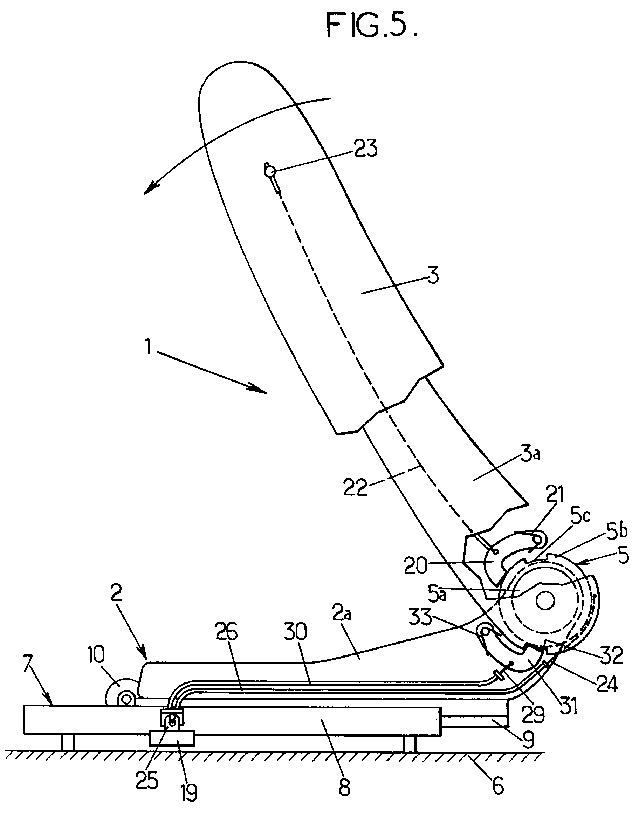

Afin de permettre à l'utilisateur de repousser simultanément l'assise 2 du siège vers l'avant, le flasque 3a du dossier est également fixé à une extrémité d'un câble métallique 24, de façon à exercer une traction sur ce câble lorsque le dossier 3 est rabattu, l'autre extrémité du câble 24 étant reliée à un levier de déverrouillage 25 (figures 2 à 4).

Le câble 24 coulisse dans une gaine flexible 26 dont une extrémité est fixée au flasque d'assise 2a, et dont l'autre extrémité est fixée à une cornière 27 solidaire du profilé fixe 8.

Le levier de déverrouillage 25 est monté pivotant sur un axe longitudinal 28 solidaire du support 19, et ce levier présente, de part et d'autre de l'axe 28, d'une part un premier bras 25a qui s'étend jusqu'à une extrémité libre fixée au câble 24, et d'autre part un deuxième bras 25b qui s'étend jusqu'à une extrémité libre appuyant sur la face supérieure de la plaque de liaison 17.

De cette façon, lorsque le dossier 3 est placé dans sa position rabattue (figures 5 à 8), le câble 24 tire vers le haut le premier bras 25a du levier de déverrouillage et le deuxième bras 25b de ce levier déplace le verrou 14 vers le bas contre la sollicitation du ressort 18, de sorte que les goupilles 15 de ce verrou libèrent l'écrou 13 tout en restant engagées dans les trous 16 du fond du profilé fixe.

Le déplacement vers le haut du premier bras 25a du levier de déverrouillage 25 détend un câble métallique 29 dont une extrémité est accrochée à l'extrémité libre du premier bras 25a.

Ce câble 29 coulisse dans une gaine flexible 30 dont une extrémité est fixée à la cornière 27 et dont l'autre extrémité est fixée au flasque 2a de l'assise.

L'extrémité du câble 29 qui n'est pas fixée au levier 25 est reliée à un crochet de blocage 31 qui, lorsque le dossier 3 est en position rabattue et lorsque le câble 29 est détendu, s'engage dans une encoche 32 du flasque de dossier 3a sous l'action d'un ressort 33.

Pour des raisons qui seront explicitées ci-après, l'encoche 32 est plus large que la partie du crochet 31 qui pénètre dans ladite encoche, de sorte que le crochet 31 bloque le dossier 3 dans sa position rabattue avec un certain jeu angulaire.

Par ailleurs, comme représenté sur les figures 2 et 8, le fond 8a du profilé fixe est solidaire d'une tige longitudinale 34 sur laquelle est monté un coulisseau 35 qui est sollicité vers l'avant contre l'écrou 13 par un ressort hélicoïdal 36, le coulisseau 35 se déplaçant en restant au voisinage immédiat de la face supérieure du fond 8a du profilé fixe.

Ainsi, lorsque le dossier 3 a été rabattu vers l'avant, dès que l'utilisateur commence à déplacer l'assise 2 vers l'avant en entraînant également l'écrou 13, le coulisseau 35 suit le mouvement de l'écrou 13 jusqu'à arriver dans une position de butée avant où il se trouve au-dessus d'une des goupilles 15 du verrou 14, ce qui maintient le verrou dans sa position déverrouillée.

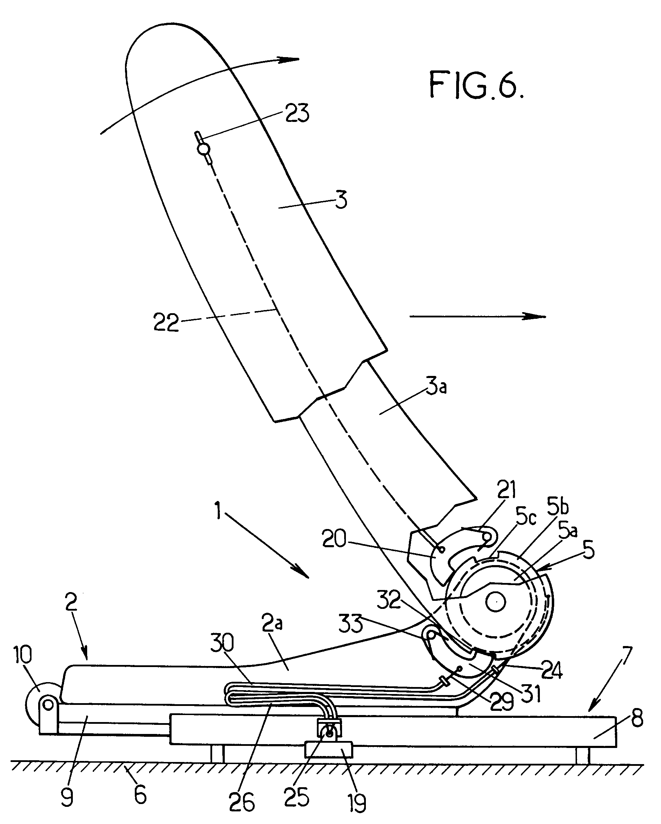

Lorsqu'un utilisateur du véhicule veut ramener le siège dans sa position initiale après avoir déplacé l'assise jusqu'en butée avant, il tire le siège vers l'arrière en agissant également sur le dossier 3, comme représenté sur la figure 6.

Grâce au léger jeu angulaire du dossier 3 qui est permis par le crochet 31 et l'encoche 32, le dossier 3 se relève alors très légèrement par rapport à sa position rabattue pendant que l'assise 2 coulisse vers l'arrière.

Ainsi, au cours du déplacement de l'assise 2 vers l'arrière, le câble 24 ne sollicite plus le levier 25, de sorte que le verrou 14 reste dans sa position déverrouillée uniquement du fait de la présence du coulisseau 35.

Lorsque l'assise 2 arrive dans sa position normale d'utilisation, réglée au préalable par l'utilisateur, l'écrou 13 repousse le coulisseau 35 vers l'arrière jusqu'à sa position initiale, de sorte que les broches 15 du verrou 14 pénètrent à nouveau dans les logements correspondants 13a de l'écrou sous l'effet du ressort 18, en replaçant simultanément le levier 25 dans sa position initiale.

Ce mouvement du levier 25 entraîne une traction sur le câble 29 qui place alors le crochet 31 dans une position effacée où il ne coopère plus avec l'encoche 32.

Il est à noter que le ressort 18 doit exercer sur le verrou 14 une force suffisante pour vaincre la force du ressort 33 sollicitant le crochet 31 vers sa position de blocage.

Le dossier 3 est alors libre de pivoter vers l'arrière, de sorte que ce dossier revient dans sa position initiale du fait de l'action de l'utilisateur, et ledit dossier se reverrouille sur le flasque mobile 5b du mécanisme d'articulation au moyen du crochet 20.

Ainsi, lorsque l'assise a été déplacée vers l'avant afin de dégager l'accès aux places arrière du véhicule, le siège ne redevient utilisable que lorsque cette assise est à nouveau verrouillée dans sa position initiale.

On notera qu'il serait possible d'appliquer l'invention à des sièges dotés de glissières non motorisées, comme divulgué par exemple dans le document EP-A-0 691 237.

Dans ce cas, les câbles 24 et 29 décrits ci-dessus seraient fixés tous les deux au trou 13a du levier 13 dans le dispositif représenté aux figures 1 à 5 de ce document, ou bien ces câbles seraient fixés tous les deux à l'ergot 103 du verrou 100 du dispositif représenté aux figures 6 et 7 de ce document.

## Revendications

1. Siège de véhicule comportant d'une part une assise (2) montée coulissante longitudinalement vers l'avant ou vers l'arrière au moyen de glissières (7), et d'autre part un dossier (3) monté pivotant sur l'assise autour d'un axe transversal (4) horizontal de façon à pouvoir être déplacé entre une position relevée d'utilisation et une position rabattue vers l'avant où le siège n'est pas utilisable, chaque glissière (7) comportant un profilé fixe solidarisable avec le véhicule et un profilé mobile qui supporte l'assise, l'un de ces deux profilés étant dit ci-après premier profilé (8) et l'autre profilé étant dit ci-après deuxième profilé (9), au moins une des glissières comportant :
- un verrou (14) qui est monté sur le premier profilé (8) et qui est déplaçable entre d'une part une position verrouillée où il coopère avec un élément complémentaire (13) lié au deuxième profilé, pour maintenir le profilé mobile dans une position normale d'utilisation réglable, et d'autre part une position déverrouillée où il permet un déplacement longitudinal libre du profilé mobile (9) vers l'avant, jusqu'à une position de butée avant, ce verrou (14) étant sollicité vers sa position verrouillée par un ressort de verrou (18) et pouvant être déplacé de sa position verrouillée à sa position déverrouillée au moyen d'un premier câble relié à des moyens d'actionnement de verrou,
- et une cale (35) qui est déplaçable entre d'une part une position active où elle bloque le verrou (14) dans sa position déverrouillée et d'autre part une position effacée où elle n'interfère pas avec le verrou, cette cale étant sollicitée vers sa position active par un ressort de cale (36), et ladite cale étant maintenue dans sa position effacée tant que la glissière est dans sa position normale d'utilisation, ce maintien étant obtenu au moyen d'un organe de butée (13) qui est monté sur le deuxième profilé de façon à être déplaçable par rapport à ce profilé pour rester au contact de la cale lorsqu'on règle la position normale d'utilisation de la glissière, cet organe de butée restant ensuite solidaire du deuxième profilé tant qu'on ne règle pas la position normale d'utilisation de la glissière,
siège **caractérisé en ce qu**'il comporte en outre un organe de blocage (31) qui est monté sur un premier élément (2) et qui peut être placé dans une position de blocage où il coopère avec un deuxième élément (3) pour bloquer le dossier en position rabattue, lesdits premier et deuxième éléments constituant l'un l'assise (2) et l'autre le dossier (3), l'organe de blocage (31) étant sollicité par un ressort (33) vers sa position de blocage et ledit organe de blocage étant en outre relié au verrou (14) par un deuxième câble (29) qui permet à l'organe de blocage de se placer dans sa position de blocage lorsque le verrou est dans sa position déverrouillée, mais qui, lorsque le verrou est dans sa position verrouillée, place l'organe de blocage dans une position effacée où il ne bloque pas le dossier, et le ressort de verrou (18) étant suffisamment puissant pour ramener simultanément le verrou (14) dans sa position verrouillée et l'organe de blocage (31) dans sa position effacée contre l'action du ressort (33) de l'organe de blocage, lorsque ledit verrou (14) cesse d'être maintenu dans sa position déverrouillée par le premier câble (24) ou la cale (35).

2. Siège de véhicule selon la revendication 1, dans lequel les moyens d'actionnement de verrou sont constitués par le dossier (3) lui-même, qui est relié au premier câble (24) pour placer le verrou (14) dans sa position déverrouillée lorsque ledit dossier est placé dans sa position rabattue, et l'organe de blocage (31) étant conçu pour bloquer le dossier (3) dans sa position rabattue avec un certain jeu angulaire qui permet de relever légèrement le dossier (3) à partir de sa position rabattue, suffisamment pour que le premier câble (24) n'empêche plus le verrou (14) de revenir en position verrouillée.

3. Siège de véhicule selon la revendication 1 ou la revendication 2, dans lequel au moins la glissière (7) qui comporte le verrou (14) est réglable longitudinalement au moyen d'un ensemble vis-écrou (11, 13), cet ensemble comprenant une vis sans fin (11) qui s'étend longitudinalement parallèlement à la glissière et qui est entraînée par un moteur (10), cette vis sans fin étant montée rotative sur le deuxième profilé (9) et étant vissée dans un écrou (13) qui constitue à la fois l'élément complémentaire avec lequel coopère le verrou (14) et l'organe de butée qui coopère avec la cale (35).

4. Siège selon l'une quelconque des revendications précédentes, dans lequel l'organe de blocage (31) est monté sur l'assise (2) et peut être engagé dans un logement (32) solidaire du dossier (3) pour bloquer ce dossier en position rabattue.

5. Siège selon la revendication 4, dans lequel le premier profilé (8) est le profilé fixe et le deuxième profilé (9) est le profilé mobile, et dans lequel au moins le deuxième câble (29) coulisse dans une gaine (30) flexible qui présente deux extrémités axiales fixées rigidement l'une au profilé fixe (8) et l'autre à l'assise (2) du siège.

6. Siège selon l'une quelconque des revendications précédentes, dans lequel la cale (35) est déplaçable axialement en translation par rapport au premier profilé (8), entre sa position active et sa position effacée.

7. Siège selon l'une quelconque des revendications précédentes, dans lequel le verrou (14) est actionné par un levier (25) monté pivotant autour d'un axe horizontal (28), ce levier présentant, de part et d'autre de son axe, un premier bras (25a) qui est relié aux premier et deuxième câbles (24, 29) et un deuxième bras qui coopère avec le verrou (14), le verrou étant monté sur le profilé fixe (8) qui constitue ainsi le premier profilé, et ce verrou étant guidé en coulissement vertical par le profilé fixe et étant déplaçable vers le bas pour passer de sa position verrouillée à sa position déverrouillée, ce qui correspond à un déplacement vers le haut du premier bras (25a) du levier.

8. Siège selon la revendication 7, dans lequel le deuxième bras (25b) du levier d'actionnement du verrou coopère avec ce verrou (14) uniquement en prenant appui sur une portion inférieure (17) appartenant à ce verrou, de façon à déplacer ledit verrou vers le bas lorsque le premier bras (25a) du levier est déplacé vers le haut.

## Claims

1. A vehicle seat comprising, on the one hand, a seating surface (2) mounted so as to slide longitudinally towards the front or towards the rear by means of slide rails (7) and, on the other hand, a backrest (3) mounted so as to pivot on the seating surface about a horizontal transverse axis (4) so as to be able to be moved between an upright utilisation position and a position in which it is folded-down towards the front and in which the seat is not utilisable, each slide rail (7) comprising a stationary shaped part which can be firmly attached to the vehicle and a movable shaped part which bears the seating surface, one of these two shaped parts being referred to hereinafter as the first shaped part (8) and the other shaped part being referred to hereinafter as the second shaped part (9), at least one of the slide rails comprising:
- a lock (14) which is mounted on the first shaped part (8) and which is movable between, on the one hand, a locked position in which it co-operates with a complementary element (13), connected to the second shaped part, in order to keep the movable shaped part in an adjustable normal utilisation-position, and, on the other hand, a released position in which it enables free longitudinal movement of the movable shaped part (9) towards the front as far as a front buffing position, this lock (14) being urged towards its locked position by a lock spring (18) and being movable from its locked position to its released position by means of a first cable linked to lock operation means,
- and a block (35) which is movable between, on the one hand, an active position in which it immobilizes the lock (14) in its released position and, on the other hand, an out-of-action position in which it does not interfere with the lock, this block being urged towards its active position by a block spring (36), and the said block being kept in its out-of-action position while the slide jail is in its normal utilisation-position, this keeping in position being obtained by means of a stop part (13) which is mounted on the second shaped part so as to be movable with respect to this shaped part in order to remain in contact with the block as the normal utilisation-position of the slide rail is adjusted, this stop part then remaining integral with the second shaped part while the normal utilisation-position of the slide rail is not being adjusted,
a seat characterised in that it moreover comprises an immobilizing part (31) which is mounted on a first element (2) and which can be placed in an immobilizing position in which it co-operates with a second element (3) to immobilize the backrest in the folded-down position, the said first and second elements constituting the seating surface (2) and the backrest (3) respectively, the immobilizing part (31) being urged by a spring (33) towards its immobilizing position and the said immobilizing part being moreover linked to the lock (14) by a second cable (29) which enables the immobilizing part to take up its immobilizing position when the lock is in its released position, but which, when the lock is in its locked position, puts the immobilizing part in an out-of-action position in which it does not immobilize the backrest, and the lock spring (18) being sufficiently powerful to simultaneously return the lock (14) into its locked position and the immobilizing part (31) into its out-of-action position against the action of the spring (33) of the immobilizing part, when the said lock (14) is no longer kept in its released position by the first cable (24) or the block (35).

2. A vehicle seat in accordance with Claim 1, in which the lock operation means are formed by the backrest (3) itself which is linked to the first cable (24) in order to put the lock (14) in its released position when the said backrest is put into its folded-down position, and the immobilizing part (31) being designed to immobilize the backrest (3) in its folded-down position with a certain angular play which enables the backrest (3) to be lifted slightly from its folded-down position, sufficiently in order that the first cable (24) no longer prevents the lock (14) from returning to the locked position.

3. A vehicle seat in accordance with Claim 1 or Claim 2, in which at least the slide rail (7) which has the lock (14) is adjustable longitudinally by means of a screw-nut unit (11, 13), this unit comprising an endless screw (11) which extends longitudinally parallel to the slide rail and which is driven by a motor (10), this endless screw being rotatably mounted on the second shaped part (9) and being screwed into a nut (13) which constitutes both the complementary element with which the lock (14) cooperates and the stop part which co-operates with the block (35).

4. A seat in accordance with any one of the preceding Claims, in which the immobilizing part (31) is mounted on the seating surface (2) and can be engaged in a housing (32) integral with the backrest (3) in order to immobilize this backrest in the folded-down position.

5. A seat in accordance with Claim 4, in which the first shaped part (8) is the stationary shaped part and the second shaped part (9) is the movable shaped part, and in which at least the second cable (29) slides in a flexible sheath (30) which has two axial ends fixed rigidly to the stationary shaped part (8) and the seating surface (2) of the seat respectively.

6. A seat in accordance with any one of the preceding Claims, in which the block (35) is axially translationally movable with respect to the first shaped part (8), between its active position and its out-of-action position.

7. A seat in accordance with any one of the preceding Claims, in which the lock (14) is operated by a lever (25) mounted so as to pivot about a horizontal axis (28), this lever having, on either side of its axis, a first arm (25a) which is linked to the first and second cables (24, 29) and a second arm which cooperates with the lock (14), the lock being mounted on the stationary shaped part (8) which thus constitutes the first shaped part, and this lock being guided - with vertical sliding - by the stationary shaped part and being movable downwards in order to pass from its locked position to its released position, this corresponding to upwards movement of the first arm (25a) of the lever.

8. A seat in accordance with Claim 7, in which the second arm (25b) of the lever for operating the lock co-operates with this lock (14) solely by resting on a lower portion (17) forming part of this lock, so as to move the said lock downwards when the first arm (25a) of the lever is moved upwards.

## Patentansprüche

1. Fahrzeugsitz mit einerseits einem Sitz bzw. Sitzelement (2), das in Längsrichtung gleitbeweglich nach vorne oder nach hinten mit Hilfe von Gleitschienen (7) angebracht ist, und andererseits einer Rückenlehne (3), die schwenkbeweglich an dem Sitzelement um eine horizontale Querachse (4) angebracht ist, derart, daß sie zwischen einer hochgestellten Benutzungsposition und einer nach vorne umgeschlagenen Position bewegt werden kann, wo der Sitz nicht verwendbar ist, wobei jede Gleitschiene (7) ein festes Profil aufweist, das mit dem Fahrzeug verbindbar ist, und ein bewegliches Profil aufweist, das das Sitzelement stützt, wobei eines der beiden Profile nachfolgend erstes Profil (8) und das andere Profil nachfolgend zweites Profil (9) bezeichnet werden, wobei wenigstens eine der Gleitschienen aufweist:
- einen Riegel (14), der an dem ersten Profil (8) angebracht ist und der zwischen einerseits einer verriegelten Position, wo er mit einem komplementären Element (13) zusammenwirkt, das mit dem zweiten Profil verbunden ist, um das bewegliche Profil in einer normalen einstellbaren Benutzungsposition zu halten, und andererseits einer entriegelten Position bewegbar ist, wo er eine freie Längsbewegung des beweglichen Profils (9) nach vorne ermöglicht, bis in eine vordere Anschlagposition, wobei dieser Riegel (14) in seine Verriegelungsposition durch eine Riegelfeder (18) beaufschlagt wird und von seiner Verriegelungsposition in seine Entriegelungsposition mit Hilfe eines ersten Kabels bewegt werden kann, das mit Riegelbetätigungseinrichtungen verbunden ist,
- und einen Keil (35), der einerseits zwischen einer aktiven Position, wo er den Riegel (14) in seiner entriegelten Position blockiert und andererseits einer Lösestellung oder Außereingriffsstellung bewegbar ist, wo er nicht mit dem Riegel in Einwirkung steht, wobei der Keil in seine aktive Position durch eine Keilfeder (36) gedrückt wird, und der Keil in seiner Löseposition gehalten wird, so lange sich die Gleitschiene in ihrer normalen Benutzungsposition befindet, wobei dieses Halten mit Hilfe eines Anschlagorgans (13) erhalten wird, das an dem zweiten Profil angebracht ist, derart, daß es bezüglich dieses Profils bewegbar ist, um in Kontakt mit dem Keil zu bleiben, wenn man die normale Benutzungsposition der Gleitschiene einstellt, wobei dieses Anschlagorgan danach mit dem zweiten Profil verbunden bleibt, solange man die normale Benutzungsposition der Gleitschiene nicht einstellt,
Sitz, dadurch gekennzeichnet, daß er darüber hinaus ein Blockierungsorgan (30) aufweist, das auf einem ersten Element (2) angebracht ist und das in eine Blokkierungsposition versetzt werden kann, wo es mit einem zweiten Element (3) zusammenwirkt, um die Rückenlehne in umgeschlagener Position zu blockieren, wobei das erste und zweite Element, das eine das Sitzelement (2) und das andere die Rückenlehne (3) bildet, wobei das Blockierungsorgan (31) durch eine Feder (30) in seine Blockierungsposition gedrückt wird und das Blockierungsorgan darüber hinaus mit dem Riegel (14) durch ein zweites Kabel (29) verbunden ist, das dem Blockierungsorgan erlaubt, sich in seine Blockierungsposition zu setzen, wenn der Riegel sich in seiner entriegelten Position befindet, das jedoch, wenn der Riegel sich in seiner entriegelten Position befindet, das Blockierungsorgan in eine Löseposition setzt, wo es die Rükkenlehne nicht blockiert, und die Riegelfeder (18) ausreichend stark ist, um gleichzeitig den Riegel (14) in seine Verriegelungsposition und das Blockierungsorgan (31) in seine Löseposition gegen die Kraft der Feder (33) des Blockierungsorgans zu bringen, wenn der Riegel (14) nicht mehr in seiner Entriegelungsposition durch das erste Kabel (24) oder den Keil (35) gehalten wird.

2. Fahrzeugsitz nach Anspruch 1, bei dem die Betätigungseinrichtungen des Riegels von der Rückenlehne (3) selbst gebildet werden, die mit dem ersten Kabel (24) verbunden ist, um den Riegel (14) in seine Entriegelungsposition zu setzen, wenn die Rückenlehne in ihre umgeschlagene Position gesetzt wird, und das Blockierungsorgan (31) derart ausgestaltet ist, daß es die Rückenlehne (3) in ihrer umgeschlagenen Position mit einem gewissen Winkelspiel blockiert, das ermöglicht, die Rückenlehne (3) ausgehend von ihrer umgeschlagenen Position leicht ausreichend anzuheben, damit das erste Kabel (24) den Riegel (14) nicht mehr daran hindert, in seine verriegelte Position zurückzukommen.

3. Fahrzeugsitz nach Anspruch 1 oder 2, bei dem wenigstens die Gleitschiene (7) die den Riegel (14) aufweist in Längsrichtung mit Hilfe einer Schraube-Mutter-Anordnung (11, 13) einstellbar ist, wobei diese Anordnung eine Endlosschraube (11) aufweist, die sich in Längsrichtung parallel zur Gleitschiene erstreckt, und die durch einen Motor (10) angetrieben ist, wobei diese Endlosschraube drehbeweglich an dem zweiten Profil (9) angebracht ist und in eine Mutter (13) eingeschraubt ist, die gleichzeitig das komplementäre Element mit dem der Riegel (14) zusammenwirkt und das Anschlagorgan bildet, das mit dem Keil (35) zusammenwirkt.

4. Fahrzeugsitz nach einem der vorhergehenden Ansprüche, bei dem das Blockierungsorgan (31) an dem Sitzelement (2) angebracht ist, und in eine Aufnahme (32) eingreifen kann, die mit der Rückenlehne (3) verbunden ist, um diese Rückenlehne in umgeschlagener Position zu blockieren.

5. Fahrzeugsitz nach Anspruch 4, bei dem das erste Profil (8) das feste Profil und das zweite Profil (9) das bewegliche Profil ist, und bei dem wenigstens das zweite Kabel (29) in einer biegsamen Hülle (30) gleitet, die zwei axiale starr befestigte Enden aufweist, das eine an dem festen Profil (8) und das andere an dem Sitzelement (2) des Sitzes.

6. Fahrzeugsitz nach einem der vorhergehenden Ansprüche, bei dem der Keil (35) axil translatorisch bezüglich des ersten Profils (8) zwischen seiner aktiven Position und seiner Löseposition bewegbar ist.

7. Fahrzeugsitz nach einem der vorhergehenden Ansprüche, bei dem der Riegel (14) durch einen Hebel (25) betätigt wird, der schwenkbeweglich um eine horizontale Achse (28) angebracht ist, wobei dieser Hebel beiderseits seiner Achse einen ersten Arm (25a), der mit dem ersten und zweiten Kabel (24, 29) verbunden ist, und einen zweiten Arm aufweist, der mit dem Riegel (14) zusammenwirkt, wobei der Riegel an dem festen Profil (14) angebracht ist, das somit das erste Profil bildet, und dieser Riegel vertikal gleitend durch das feste Profil geführt wird und nach unten bewegbar ist, um sich von seiner verriegelten Position in seine entriegelte Position zu bewegen, was einer Bewegung nach oben des ersten Arms (25a) des Hebels entspricht.

8. Fahrzeugsitz nach Anspruch (7), bei dem der zweite Arm (25b) des Betätigungshebels des Riegels mit diesem Riegel (14) nur durch Anlage auf einen unteren Abschnitt (17) zusammenwirkt, der zu diesem Riegel gehört, derart, daß der Riegel nach unten verschoben wird, wenn der erste Arm (25a) des Hebels nach oben bewegt wird.
